# EUROPÄISCHE PATENTSCHRIFT

(11) **EP 1 186 182 B1**
(45) Veröffentlichungstag und Bekanntmachung des Hinweises auf die Patenterteilung: **13.08.2008**
(21) Anmeldenummer: 00945615.3
(22) Anmeldetag: 13.06.2000
(51) Int. Cl.: H04Q 7/22

(54) **VERFAHREN UND VORRICHTUNG ZUR ERMÖGLICHUNG EINES ZUGANGS FÜR INDIVIDUELLE TEILNEHMER EINES DIGITALEN MOBILFUNKNETZES**
METHOD AND DEVICE FOR ENABLING A DIRECT ACCESS FOR INDIVIDUAL SUBSCRIBERS OF A DIGITAL MOBILE RADIO TELEPHONE NETWORK TO AVAILABLE CELL BROADCAST SERVICES
PROCEDE ET DISPOSITIF PERMETTANT A DES ABONNES INDIVIDUELS D'UN RESEAU TELEPHONIQUE MOBILE NUMERIQUE D'ACCEDER DIRECTEMENT A DES SERVICES DE DIFFUSION CELLULAIRE EXISTANTS

(30) Priorität: 14.06.1999 DE 19927050
(43) Veröffentlichungstag der Anmeldung: 13.03.2002
(73) Patentinhaber: T-Mobile Deutschland GmbH, 53227 Bonn (DE)
(72) Erfinder: ZSCHINTZSCH, Hans, D-53639 Königswinter (DE)
(74) Vertreter: Riebling, Peter
(86) Internationale Anmeldenummer: PCT/DE2000/001871
(87) Internationale Veröffentlichungsnummer: WO 2000/078060

(56) Entgegenhaltungen:
- EP-A- 0 851 697
- WO-A-97/26739
- ETSI: "Digital cellular telecommunications system; Interface protocols for the connection of Short Message Service Centres (SMSCs) to Short Message Entities (SMEs) (GSM 03.39 version 5.0.0)" 1. November 1996 (1996-11-01) , ETSI , SOPHIA ANTIPOLIS, FRANCE. XP002147914 Seite 21, Absatz A.6.3.1

## Beschreibung

Die Erfindung betrifft ein Verfahren und eine Vorrichtung zur Ermöglichung eines direkten Zugangs für individuelle Teilnehmer eines digitalen Mobilfunknetzes zu vorhandenen Cell Broadcast Diensten.

Teilnehmer in Mobilfunknetzen haben die Möglichkeit, Kurznachrichten (Short Messages) zu versenden. Normalerweise wird eine Kurznachricht zu genau einem anderen Mobilteilnehmer oder genau einem Empfänger im Festnetz übertragen. Der Cell Broadcast Dienst dagegen erlaubt es, Kurznachrichten an beliebig viele Teilnehmer in einer definierten Region zu versenden (Radio-Prinzip). Ursprung dieser Nachrichten sind in der Regel Informationsanbieter, die über eine Festnetzverbindung an das Cell Broadcast Center (CBC) angeschlossen sind. Einem einzelnen Teilnehmer ist es bisher zwar möglich, über sein Mobilfunkendgerät Cell Broadcast Nachrichten zu empfangen, es ist ihm jedoch nicht möglich, über sein Endgerät mehrere andere Teilnehmer mittels Cell Broadcast direkt zu erreichen.

Die EP-A-0 851 697 offenbart ein System zur Ermöglichung eines direkten Zugangs für individuelle Teilnehmer eines digitalen Mobilfunknetzes zu vorhandenen Cell Broadcast Diensten. Die Mobilfunkendgeräte der Teilnehmer sind entsprechend ausgerüstet, um über das Mobilfunknetz Punkt-zu-Punkt Kurznachrichten mit einer Kurznachrichtenzentrale auszutauschen, wobei eine als Cell Broadcast Nachricht deklarierte Kurznachrichten an ein Cell Broadcast Center weitergeleitet und vom Mobilfunknetz als Cell Broadcast Nachricht ausgestrahlt wird.

Die Aufgabe der Erfindung besteht darin, ein Verfahren und eine Vorrichtung zur Ermöglichung eines direkten Zugangs für individuelle Teilnehmer eines digitalen Mobilfunknetzes zu vorhandenen Cell Broadcast Diensten komfortabler und sicherer zu gestalten.

Diese Aufgabe wird erfindungsgemäß durch die Merkmale der unabhängigen Patentansprüche gelöst.

Die Erfindung kombiniert die beiden Dienste der Punkt-zu-Punkt Kurznachrichtenverbindung (SMS PP) und dem Cell Broadcast (CB). Eine Koppelinstanz in Form eines Servers oder Gateways nimmt Punkt-zu-Punkt Kurznachrichten entgegen, nimmt notwendige Prüfungen, Anpassungen, Umsetzungen der Nachrichten vor und übermittelt sie mittels eines für Cell Broadcast Center geltenden Verfahrens an das Cell Broadcast Center weiter. Es kann ausgenutzt werden, daß Absender in Mobilfunknetzen authentisiert sind, da sie beim Einbuchen in das Mobilfunknetz die reguläre Authentisierungsprozedur durchlaufen. Erfindungsgemäß ist eine Authentisierungskomponente und/oder Filterkomponente in der Koppelinstanz vorgesehen.

Wesentlich - und der Hauptvorteil gegenüber ähnlichen Aufgabenstellungen - ist, daß die für die Nutzung des Verfahrens notwendigen Eigenschaften in Mobilfunkendgeräten bereits vorhanden sind.

Erfindungsgemäß wird also vom Teilnehmer eine reguläre Kurznachricht (SMS PP) über die Kurznachrichtenzentrale (SMSC) an einen bestimmten "Teilnehmer", in diesem Fall die Koppelinstanz, geschickt. Hier werden die Nachrichten entsprechend aufbereitet und an das Cell Broadcast Center weitergeleitet, durch welche ein Cell Broadcast Ruf in einer bestimmten Broadcastregion initiiert wird.

Wesentlich ist auch, daß die für die Nutzung von Cell Broadcast erforderlichen Parameter, wie z.B. die Angabe der Region, in welcher die Broadcastnachricht ausgestrahlt werden soll, im Nachrichtentext angegeben werden können. Die Broadcastregion kann im Minimalfall eine einzige Funkzelle sein, im Maximalfall der Versorgungsbereich des gesamten Mobilfunknetzes.

Gegebenenfalls können die erforderlichen Parameter aber auch von der Koppelinstanz hinzugefügt werden. Dabei kann z.B. vom Teilnehmer, vom Netzbetreiber oder Provider eine bestimmte Broadcastregion fest vorgewählt werden, die dann von der Koppelinstanz automatisch in die Broadcastnachricht eingefügt wird.

Die Strategie, nach der das geschieht, kann relativ frei gewählt werden, und/aber auch von der feineren Wirkungsweise der intendierenden Anwendung abhängig gewählt werden. Es sind grundsätzlich alle Anwendungen effizienter abwickelbar, bei denen 1:N Kommunikationsbeziehungen von Bedeutung sind.

Wesentlich ausgenutzt wird, daß vorhandene Abrechnungsverfahren im Mobilfunknetz, d.h. Abrechnungsverfahren im eigentlichen Mobilfunknetz, im SMSC und im CBC, für das erfindungsgemäße Verfahren mitbenutzt werden können.
Es kann aber auch eine eigene Abrechnungskomponente in der Koppelinstanz vorgesehen werden.

Das Verfahren ist anwendbar in allen Mobilfunknetzen, bei denen Punkt-zu-Punkt Nachrichten und Broadcastnachrichten angeboten oder unterstützt werden.

Nachfolgend wird die Erfindung anhand eines Ausführungsbeispiels unter Bezugnahme auf eine Zeichnungsfigur näher beschrieben. Aus der Zeichnung und ihrer Beschreibung gehen weitere Merkmale und Vorteile der Erfindung hervor.

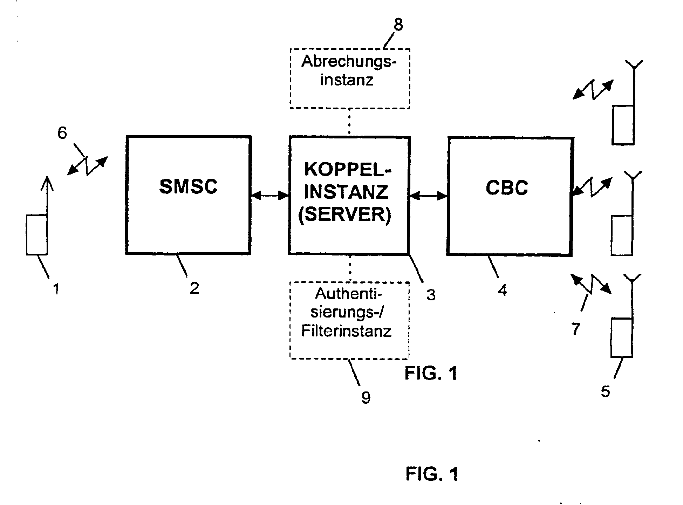

Figur 1 zeigt eine Kurznachrichtenzentrale 2, die von einer Mobilstation 1 eine Kurznachricht 6 empfängt. Dabei handelt es sich dem Format nach um eine reguläre Punkt-zu-Punkt Kurznachricht 6, die jedoch vom Teilnehmer 1 erfindungsgemäß als Cell Broadcast Nachricht deklariert ist. Dies kann durch Setzen eines bestimmten Parameters in der SMS Nachricht erreicht werden. Außerdem ist in der SMS Nachricht ein weiterer Parameter enthalten, der die Region festlegt, in welcher die Cell Broadcast Nachricht ausgestrahlt werden soll.

Die als Cell Broadcast Nachricht deklarierte SMS 6 wird an eine mit der Kurznachrichtenzentrale 2 verbundene Koppelinstanz 3 übergeben, in der notwendige Prüfungen, Format-Anpassungen oder -umsetzungen der Nachricht vorgenommen werden, bevor sie in einem geeigneten Format an das Cell Broadcast Center 4 weitergeleitet wird. Das Cell Broadcast Center 4 ergreift in bekannter Weise die notwendigen Maßnahmen, damit die CB-Nachricht 7 in der vorherbestimmten Region an die dort befindlichen Mobilstationen 5 ausgestrahlt wird.

Die Koppelinstanz 3 kann weitere Einrichtungen 8 enthalten oder mit diesen verbunden sein, die z.B. für die Abrechnung der Dienstleistung zuständig sind.

Ferner kann eine Authentisierungs-/Filterinstanz 9 vorgesehen sein, die die Berechtigung der Teilnehmer zur Nutzung dieser Dienstleistung überprüft.

In einer konkreten Anwendung kann den berechtigten Mobilfunkteilnehmern z.B. die Möglichkeit geboten werden, selbst Cell Broadcast Nachrichten zu erzeugen, zum Beispiel im Zusammenhang mit einem CB-(Klein-) Anzeigendienst. Notwendig für die Teilnahme/Inanspruchnahme ist nur die Erlaubnis zur Nutzung der regulären SMS-Dienste (SMS-MO, SMS MT).

Die für die CB-Nachricht 7 geltende Region, die sogenannte CB-Area, wird z.B. durch Angabe der (Telekom-) Ortsnetzvorwahl, der Postleitzahl oder des Autokennzeichens in der an die Kurznachrichtenzentrale 2 gesendeten SMS PP Nachricht bestimmt.

### Zeichnungslegende

- 1: Mobilstation (SMS PP-Sender)
- 2: Kurznachrichtenzentrale (SMSC)
- 3: Koppelinstanz
- 4: Cell Broadcast Center (CBC)
- 5: Mobilstationen (CB-Empfänger)
- 6: SMS PP Nachricht
- 7: CB Nachricht
- 8: Abrechnungsinstanz
- 9: Authentisierungs-/Filterinstanz

## Patentansprüche

1. Verfahren zur Ermöglichung eines direkten Zugangs für individuelle Teilnehmer eines digitalen Mobilfunknetzes zu vorhandenen Cell Broadcast Diensten, wobei die Mobilfunkendgeräte der Teilnehmer ausgerüstet sind, um über das Mobilfunknetz Punkt-zu-Punkt Kurznachrichten mit einer Kurznachrichtenzentrale auszutauschen, wobei als Cell Broadcast Nachricht deklarierte Kurznachrichten an ein Cell Broadcast Center weitergeleitet werden,
**dadurch gekennzeichnet,**
**daß** die Punkt-zu-Punkt Kurznachrichten von einer mit der Kurznachrichtenzentrale verbundenen Koppelinstanz entgegengenommen werden, daß in der Koppelinstanz notwendige Prüfungen, Anpassungen und Umsetzungen der Nachrichten vorgenommen werden, sowie eine Authentisierung und/oder Filterung und/oder Selektion der Teilnehmer erfolgt, und daß die Nachrichten mittels eines für Cell Broadcast Center geltenden Verfahrens an das Cell Broadcast Center weitergeleitet werden.

2. Verfahren nach Anspruch 1, **dadurch gekennzeichnet, daß** die für die Nutzung von Cell Broadcast erforderlichen Parameter, wie die Angabe der Region, in welcher die Broadcastnachricht ausgestrahlt werden soll, vom Teilnehmer in der Punkt-zu-Punkt Kurznachricht angegeben werden.

3. Verfahren nach Anspruch 1, **dadurch gekennzeichnet, daß** die für die Nutzung von Cell Broadcast erforderlichen Parameter vom Teilnehmer und/oder Netzbetreiber fest vorgegeben sind und der Broadcastnachricht von der Koppelinstanz hinzugefügt werden.

4. Verfahren nach einem der Ansprüche 1 bis 3, **dadurch gekennzeichnet, daß** die für die Broadcastnachricht geltende Region durch Angabe der Ortsnetzvorwahl, der Postleitzahl oder des Autokennzeichens bestimmt wird.

5. Verfahren nach einem der Ansprüche 1 bis 4, **dadurch gekennzeichnet, daß** im Mobilfunknetz vorhandene Abrechnungsverfahren verwendet werden.

6. Verfahren nach einem der Ansprüche 1 bis 5, **dadurch gekennzeichnet, daß** in der Koppelinstanz vorgesehene Abrechnungsverfahren verwendet werden.

7. Vorrichtung zur Ermöglichung eines direkten Zugangs für individuelle Teilnehmer eines digitalen Mobilfunknetzes zu vorhandenen Cell Broadcast Diensten, wobei die Mobilfunkendgeräte der Teilnehmer ausgerüstet sind, um über das Mobilfunknetz Punkt-zu-Punkt Kurznachrichten mit einer Kurznachrichtenzentrale auszutauschen, wobei als Cell Broadcast Nachricht deklarierte Kurznachrichten an ein Cell Broadcast Center weitergeleitet werden,
**dadurch gekennzeichnet,**
**daß** eine mit der Kurznachrichtenzentrale (2) verbundene Koppelinstanz (3) vorgesehen ist, die Punkt-zu-Punkt Kurznachrichten (6) entgegennimmt, daß in der Koppelinstanz (3) Mittel zur Durchführung von notwendigen Prüfungen, Anpassungen und Umsetzungen der Nachrichten sowie eine Authentisierungskomponente und/oder Filterkomponente (9) vorgesehen sind, und daß die Koppelinstanz (3) mit dem Cell Broadcast Center (4) verbunden ist, an welche die aufbereiteten Nachrichten weitergeleitet werden.

8. Vorrichtung nach Anspruch 7, **dadurch gekennzeichnet, daß** die Punkt-zu-Punkt Kurznachrichten (6) Parameter zur Definition der Broadcastregion und gegebenenfalls andere Parameter enthalten.

9. Vorrichtung nach einem der Ansprüche 7 oder 8, **dadurch gekennzeichnet, daß** in der Koppelinstanz (3) eine Abrechnungsinstanz (8) vorgesehen ist.

## Claims

1. Method for enabling direct access for individual subscribers to a digital mobile communications network to available cell broadcast services, wherein the mobile communications terminal devices of the subscribers are equipped to exchange point-to-point short messages via the mobile communications network with a short message control centre, wherein short messages declared as a cell broadcast message are passed on to a cell broadcast centre, **characterised in that** the point-to-point short messages are received by a switching entity connected to the short message control centre, that in the switching entity necessary checks, adaptations and conversions of the messages are carried out and authentication and/or filtering and/or selection of the subscribers takes place and that the messages are passed on to the cell broadcast centre by means of a method valid for cell broadcast centres.

2. Method according to claim 1, **characterised in that** the parameters required for using cell broadcast, such as specification of the region in which the broadcast message is to be sent out, are specified in the point-to-point short message by the subscriber.

3. Method according to claim 1, **characterised in that** the parameters required for using cell broadcast are rigidly laid down by the subscriber and/or network operator and added to the broadcast message by the switching entity.

4. Method according to any of claims 1 to 3, **characterised in that** the region valid for the broadcast message is determined by specifying the local network area code, the post code or the car registration.

5. Method according to any of claims 1 to 4, **characterised in that** billing procedures available in the mobile communications network are used.

6. Method according to any of claims 1 to 5, **characterised in that** billing procedures provided in the switching entity are used.

7. Device for enabling direct access for individual subscribers to a digital mobile communications network to available cell broadcast services, wherein the mobile communications terminal devices of the subscribers are equipped to exchange point-to-point short messages via the mobile communications network with a short message control centre, wherein short messages declared as a cell broadcast message are passed on to a cell broadcast centre, **characterised in that** a switching entity (3) connected to the short message control centre (2) is provided which receives point-to-point short messages (6), that in the switching entity (3) means for carrying out necessary checks, adaptations and conversions of the messages as well as an authentication component and/or filter component (9) are provided and that the switching entity (3) is connected to the cell broadcast centre (4) to which the treated messages are passed on.

8. Device according to claim 7, **characterised in that** the point-to-point short messages (6) contain parameters for defining the broadcast region and if need be other parameters.

9. Device according to any of claims 7 or 8, **characterised in that** in the switching entity (3) a billing entity (8) is provided.

## Revendications

1. Procédé pour permettre à des abonnés individuels d'un réseau téléphonique mobile numérique d'accéder directement à des services de diffusion cellulaire existants, étant précisé que les terminaux mobiles des abonnés sont équipés pour échanger par l'intermédiaire du réseau mobile des messages courts point à point avec un central de messages courts, et que les messages courts qui sont déclarés messages de diffusion cellulaire sont transmis à un centre de diffusion cellulaire,
**caractérisé en ce que** les messages courts point à point sont reçus par une instance de couplage qui est reliée au central de messages courts, **en ce que** les contrôles, adaptations et conversions nécessaires des messages sont réalisés dans l'instance de couplage et une authentification et/ou un filtrage et/ou une sélection des abonnés ont lieu, et **en ce que** les messages sont transmis à l'aide d'un procédé valable pour le centre de diffusion cellulaire au centre de diffusion cellulaire.

2. Procédé selon la revendication 1, **caractérisé en ce que** les paramètres requis pour l'utilisation de la diffusion cellulaire, comme l'indication de la région dans laquelle le message doit être diffusé, sont indiqués par l'abonné dans le message point à point.

3. Procédé selon la revendication 1, **caractérisé en ce que** les paramètres requis pour l'utilisation de la diffusion cellulaire sont prédéfinis définitivement par l'abonné et/ou l'exploitant du réseau et sont ajoutés par l'instance de couplage au message de diffusion.

4. Procédé selon l'une des revendications 1 à 3, **caractérisé en ce qu'**on définit la région valable pour le message de diffusion en indiquant l'indicatif du réseau local, le code postal ou l'immatriculation du véhicule.

5. Procédé selon l'une des revendications 1 à 4, **caractérisé en ce qu'**on utilise des procédés de facturation existant dans le réseau mobile.

6. Procédé selon l'une des revendications 1 à 5, **caractérisé en ce qu'**on utilise des procédés de facturation prévus dans l'instance de couplage.

7. Dispositif pour permettre à des abonnés individuels d'un réseau téléphonique mobile numérique d'accéder directement à des services de diffusion cellulaire existants, étant précisé que les terminaux mobiles des abonnés sont équipés pour échanger par l'intermédiaire du réseau mobile des messages courts point à point avec un central de messages courts, et que les messages courts qui sont déclarés messages de diffusion cellulaire sont transmis à un centre de diffusion cellulaire,
**caractérisé en ce qu'**il est prévu une instance de couplage (3) qui est reliée au central de messages courts (2) et qui reçoit les messages point à point (6), **en ce qu'**il est prévu dans l'instance de couplage (3) des moyens pour effectuer les contrôles, adaptations et conversions nécessaires des messages, ainsi qu'un élément d'authentification et/ou un élément de filtrage (9), et **en ce que** l'instance de couplage (3) est reliée au centre de diffusion cellulaire (4) auquel sont transmis les messages traités.

8. Dispositif selon la revendication 7, **caractérisé en ce que** les messages courts point à point (6) contiennent des paramètres pour définir la région de diffusion, et éventuellement d'autres paramètres.

9. Dispositif selon la revendication 7 ou 8, **caractérisé en ce qu'**il est prévu dans l'instance de couplage (3) une instance de facturation (8).
